# FASCICULE DE BREVET EUROPEEN

(11) **EP 1 519 787 B1**
(45) Date de publication et mention de la délivrance du brevet: **09.07.2008**
(21) Numéro de dépôt: 03761619.0
(22) Date de dépôt: 16.06.2003
(51) Int. Cl.: B01J 31/28, C07C 5/03

(54) **PROCEDE D HYDROGENATION SELECTIVE DE COMPOSES POLYINSATURES EN COMPOSES MONOINSATURES UTILISANT UN CATALYSEUR HOMOGENE**
VERFAHREN ZUR SELEKTIVEN HYDRIERUNG VON MEHRFACH UNGESÄTTIGTEN VERBINDUNGEN ZU EINFACH UNGESÄTTIGTEN VERBINDUNGEN UNTER VERWENDUNG EINES HOMOGENKATALYSATORS
METHOD FOR SELECTIVE HYDROGENATION OF POLYUNSATURATED COMPOUNDS TO MONOUNSATURATED COMPOUNDS USING A HOMOGENEOUS CATALYST

(30) Priorité: 28.06.2002 FR 0208160
(43) Date de publication de la demande: 06.04.2005
(73) Titulaire: Institut Français du Pétrole, 92852 Rueil-Malmaison Cedex (FR)
(72) Inventeur: HILLION, Gérard, F-95220 Herblay (FR); SAVARY, Laurent, F-78420 Carrières sur Seine (FR); PRORIOL, David, 69530 Brignais (FR); GAUTREAU, Christophe, 86220 Dange St. Romain (FR); UZIO, Denis, 69220 Belleville (FR); OLIVIER-BOURBIGOU, Hélène, F-92500 Rueil Malmaison (FR)
(86) Numéro de dépôt international: PCT/FR2003/001811
(87) Numéro de publication internationale: WO 2004/002624

(56) Documents cités:
- EP-A- 1 110 941
- US-A- 3 890 400
- US-A- 4 357 478
- US-A- 6 040 263

## Description

La présente invention concerne l'hydrogénation des composés dioléfiniques en composés monooléfiniques et plus particulièrement l'hydrogénation sélective du butadiène-1,3 dans une charge comprenant une coupe C4.

Les procédés de conversion des hydrocarbures se déroulant à hautes températures, tels que par exemple le vapocraquage, la viscoréduction, le craquage catalytique et la cokéfaction, permettent une large production de composés insaturés dont la formation est favorisée à haute température : des composés acétyléniques (acétylène, propyne, vinyl- et éthyl-acétylène), dioléfiniques, tels que le propadiène-1,2, le butadiène-1,2 et 1,3, oléfiniques, tels que l'éthylène, le propylène, le n-butène-1, les n-butènes-2, l'isobutène, les pentènes, et d'autres composés dont le point d'ébullition est compris dans l'intervalle de la coupe "essence" et qui peuvent être oléfiniques ou dioléfiniques. Les composés les plus insaturés (acétyléniques et dioléfiniques) sont très instables et conduisent très facilement à des produits de poids moléculaires élevés (oligomères, gommes) par des réactions de polymérisation. Ces composés fortement insaturés devront donc être éliminés pour permettre l'utilisation des différentes coupes issues de ces procédés pour la chimie ou pour les procédés de polymérisation des oléfines. Par exemple, la coupe C4 de vapocraquage contient une forte proportion de butadiène-1,3 qui devra être éliminé avant qu'elle soit utilisée dans les unités de polymérisation des butènes. De même, les composés MéthylAcétylène (MA) et PropaDiène (PD) présents dans la coupe C3 de vapocraquage à hauteur de 3 à 4 % en poids doivent être éliminés avant que le propylène soit utilisé pour la synthèse du polypropylène. Les spécifications en composés fortement insaturés pour les charges d'unités de polymérisation sont très sévères étant donné la grande sensibilité à ces composés des nouvelles classes de catalyseurs de polymérisation (métallocènes). Les spécifications sur la qualité des polymères produits imposent également une grande pureté des charges traitées.

De façon conventionnelle, le butadiène-1,3 est séparé de la coupe oléfinique, par exemple par distillation extractive en présence de diméthylformamide ou de N-méthyl-pyrrolidone. La coupe oléfinique ainsi obtenue contient de l'isobutane, de l'isobutène, de butène-1, des butènes-2, du n-butane et du butadiène-1,3, ce dernier à une teneur pouvant varier entre 0,1 et 2 % en poids.

Si le butadiène-1,3 n'est pas un produit valorisé, la coupe peut être directement traitée sur un catalyseur en présence d'hydrogène pour transformer le butadiène-1,3 en n-butènes.

Si le butène-2 est désiré, il est nécessaire d'utiliser des procédés permettant la production importante de butène-2 et la séparation des différents composés tels que l'hydrogénation sélective du butadiène-1,3 en butènes avec une forte isomérisation du butène-1 en butène-2. Le butène-2 est utilisé comme produit de base de la pétrochimie. Une telle utilisation nécessite une hydrogénation quasi totale du butadiène-1,3, dont la présence n'est tolérée qu'à des teneurs inférieures à 10 ppm poids.

Lorsqu'on cherche à atteindre ces faibles teneurs en butadiène-1,3 avec les catalyseurs conventionnels à base de nickel ou de palladium, on observe une diminution de la teneur en butène-2, due à la formation de butane. Pour limiter l'hydrogénation consécutive et donc la formation de butane, les solutions proposées sont plus limitées.

Une autre application envisagée peut être la diminution de la teneur en butadiène-1,3 dans une coupe riche en butène-1, sans que ce dernier soit transformé en butane ou isomérisé en butène-2, cis et/ou trans. Cette réaction peut être intégrée dans un procédé de production de butène-1, effectué dans un réacteur de finition permettant de réduire la teneur en butadiène-1,3 à moins de 10 ppm.

Comme décrit dans la littérature (voir par exemple dans "Proceedings of the DGMK Conférence", 11-13 novembre 1993, Kassel, Allemagne: "Selective Hydrogenation Catalysts and Processes : Bench to Industrial Scale" - Boitiaux J.P. et coll.), la sélectivité en hydrogénation de composés fortement insaturés (dioléfines ou composés acétyléniques) en oléfines provient d'une forte complexation du composé insaturé sur le palladium, empêchant l'accès des oléfines au catalyseur et prévenant ainsi leur transformation en paraffines. Ceci est clairement illustré dans la publication citée ci-dessus où le butyne-1 est sélectivement transformé en butène-1 sur un catalyseur à base de palladium. On note cependant que cette vitesse d'hydrogénation est relativement faible, répondant généralement à une cinétique d'ordre négatif par rapport au composé acétylénique. Lorsque tout le composé acétylénique est totalement converti, l'hydrogénation consécutive du butène-1 se déroule avec une vitesse beaucoup plus importante que celle de l'hydrogénation du composé acétylénique. Dans le cas du butadiène-1,3 et pour des catalyseurs conventionnels, la vitesse d'hydrogénation du diène est généralement proche de celle de l'oléfine lorsque les molécules ne sont pas en mélange ou hydrogénées consécutivement.

Ce phénomène pose un certain nombre de problèmes au niveau des unités industrielles. Tout d'abord, pour atteindre les spécifications en butadiène-1,3 de la coupe oléfinique, des conversions très élevées en butadiène-1,3 sont nécessaires. Ceci a pour effet de baisser fortement la concentration du butadiène-1,3 dans le réacteur et notamment en sortie, à des teneurs inférieures à celles correspondant à un recouvrement total de la surface des catalyseurs. Les molécules oléfiniques ont alors accès à la surface active et comme leur vitesse d'hydrogénation est du même ordre que celle du butadiène-1,3, celles-ci sont consommées. Une quantité importante de butène-2 est transformée en butane. Il est donc tout à fait intéressant de trouver un catalyseur permettant l'hydrogénation du butadiène-1,3 avec une vitesse beaucoup plus élevée que celle de l'hydrogénation du butène-2, que ces composés soient hydrogénés seuls ou en mélange. L'atteinte de sélectivités élevées et de spécifications sévères en composés fortement insaturés requiert donc des catalyseurs conduisant à des rapports élevés entre la constante de vitesse d'hydrogénation du butadiène-1,3 et celle des butènes. Un autre système catalytique intéressant est constitué par un site actif permettant de limiter au maximum la vitesse d'hydrogénation du composé le moins insaturé (oléfine) indépendamment de la dioléfine ou de l'acétylénique. L'intérêt d'un tel catalyseur ne se limite pas à une augmentation de la sélectivité en butène-2, mais il permet aussi un meilleur contrôle du procédé d'hydrogénation. En effet, dans le cas de problèmes mineurs de distribution locale d'hydrogène, l'utilisation d'un tel catalyseur ne conduit pas à une conversion élevée des butènes en butane et donc réduira les problèmes de forte exothermicité liés à ces hydrogénations mal contrôlées, qui aggravent les problèmes de distribution.

D'autre part, avec les coupes C4 dont le point d'ébullition est très bas, il est possible de conserver le catalyseur dans le milieu réactionnel et de récupérer les effluents en phase gazeuse. Une injection continue du catalyseur liquide, représentant quelques ppm de métal, peut être envisagée afin de maintenir une activité catalytique stable au cours du temps.

Pour apporter une solution à ce problème, il est donc intéressant de trouver à utiliser un catalyseur d'hydrogénation qui permette l'hydrogénation du butadiène-1,3 en butènes et qui soit peu actif pour l'hydrogénation consécutive du butène-1 ou du butène-2 en butane.

Le document US-A-3 890 400 décrit un procédé d'hydrogénation sélective de 1,5-cyclooctadiène et/ou de 1,5,9-cyclododécatriène, respectivement en cyclooctène et en cyclododécène, qui utilise un système catalytique comprenant un sel de fer, un composé organométallique réducteur et une phosphine.

Le document US-A-4 357 478 décrit un procédé d'hydrogénation de divers composés insaturés comportant des liaisons multiples C-C, C-O, C-N ou N-O, catalysé par le produit de la réaction d'un tri-hydrocarbylaluminium, comme agent réducteur, d'un carboxylate de métal de transition et d'un acide carboxylique fort.

Enfin, le document EP-A-1 110 941 décrit un procédé d'obtention d'un corps gras ramifié, sous forme d'un co-dimère, par addition d'au moins un composé monooléfinique sur un corps gras comportant au moins deux liaisons éthyléniques conjuguées ou non, en présence d'un système catalytique comprenant au moins un composé du fer, au moins un composé réducteur et au moins un ligand contenant du phosphore, de l'arsenic, de l'antimoine ou de l'azote. Les composés insaturés ramifiés obtenus peuvent ensuite être hydrogénés en présence du même système catalytique.

La présente invention a pour objet un procédé d'hydrogénation sélective d'au moins du butadiène-1,3 dans une charge comprenant une coupe C4, ledit procédé comprenant le passage de ladite charge au contact d'une composition de catalyseur définie ci-après.

La composition catalytique utilisée dans le procédé de l'invention permet l'hydrogénation du butadiène-1,3 en butènes avec des vitesses au moins 3 fois et en général environ 5 fois supérieures à la vitesse d'hydrogénation des butènes en butane.

Cette composition catalytique, soluble, peut être définie d'une manière générale par le fait qu'elle comprend :
- au moins un sel de fer choisi parmi les halogénures, les acétylacétonates et les carboxylates d'acides organiques possédant de 2 à 25 atomes de carbone ;
- au moins un ligand choisi parmi les ligands azotés
- et au moins un réducteur organométallique choisi parmi les dérivés organométalliques d'au moins un métal choisi dans le groupe formé par le lithium, le sodium et l'aluminium.

Plus particulièrement, la composition catalytique utilisée dans le procédé de l'invention est caractérisée :
- en ce que le métal est le fer. Ce métal est introduit sous la forme d'halogénures, d'acétylacétonates, mais de préférence sous forme de carboxylates d'acides organiques possédant de 2 à 25 atomes de carbone. Parmi ces derniers on peut citer les acétates, les octoates, les décanoates, les naphténates, les stéarates, les palmitates les oléates et les benzoates ;
- en ce que le réducteur est choisi parmi des dérivés organométalliques d'au moins un métal provenant du groupe formé par le lithium, le sodium, l'aluminium et même des dérivés mixtes de l'aluminium et du sodium et/ou du lithium possédant au moins une liaison carbone-métal ou hydrogène-métal, chacune de ces liaisons correspondant à une fonction réductrice. Ces agents réducteurs se présentent soit directement sous forme liquide ou sous une la forme d'un solide qu'il faut mettre en solution dans un solvant adapté. On peut citer à titre d'exemples les organoaluminiques de formule générale AIR_{y}(X)_{3-y}, où R est un groupement alkyle, par exemple méthyle, éthyle, isopropyle, butyle, isobutyle
ou terbutyle, etc. ; où X est un halogénure et y = 1, 2 ou 3, les magnésiens de formule MgR₂, les aluminoxanes, le borhydrure de sodium et les hydrures alcalins variés, tels que LiAlH₄ et NaAlH₄ eux-mêmes ou leurs dérivés obtenus en substituant de 1 à 3 atomes d'hydrogène par 1, 2 ou 3 groupements alcoxy, par exemple LiAlH₃(OR), LiAlH₂(OR)₂ et LiAlH(OR)₃, où R est un groupement alkyle, par exemple méthyle, éthyle, isopropyle, butyle, isobutyle ou terbutyle et,
- en ce que le ligand est choisi parmi les ligands azotés.

Parmi les ligands azotés, on peut citer à titre d'exemples les amines et polyamines, l'imidazole, les imidazoles substitués, le pyrrole et les pyrroles substitués, les pyrazoles, les dérivés amidiques, les imines ou diimines (fabriqués par exemple par réaction du glyoxal avec un dérivé de l'aniline substitué sur le noyau aromatique), enfin les dérivés pyridiniques.

Des exemples particuliers de ligands ont pour formules générales :

R-N =CR'-CR'= N-R,

avec R' = H ou CH3, n = 1, 2 ou 3 ou 4 et R = alkyle, aryle ou aryle partiellement substitué par 1, 2, 3 ou 4 groupement méthyle, éthyle, isopropyle ou méthoxy. Les formules développées suivantes illustrent certains de ces produits :
- le 2,3 - bis(2,6-diméthyl phényl imino) butane 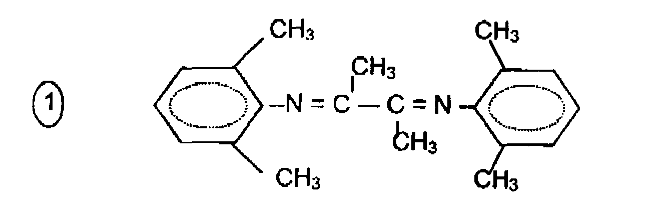
- le bis(2,6-diméthyl phényl imino) éthane 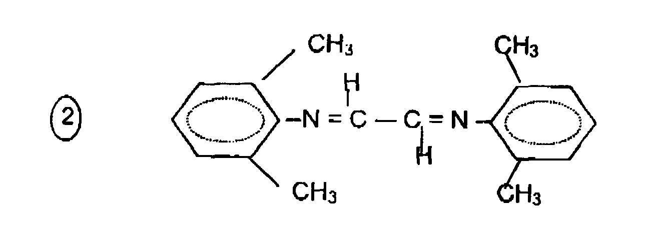
- le 2,3-bis(méthyl-2-phényl imino) butane 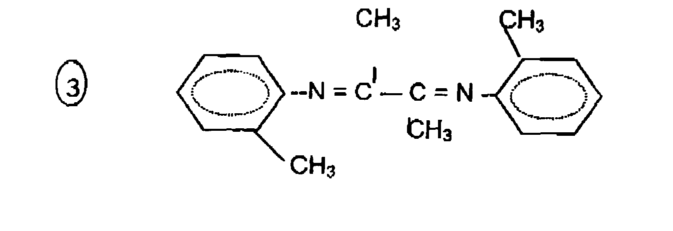
- le 2,3-bis(2,6-diidopropyl phényl imino) butane 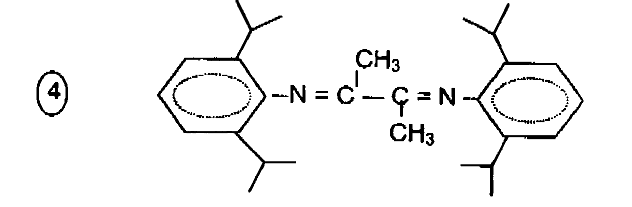
- le 2,2-bipyridyle 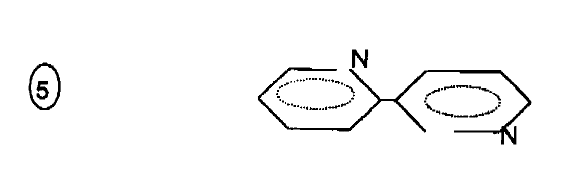
- 2,3-bis(4-méthoxy phényl imino) butane 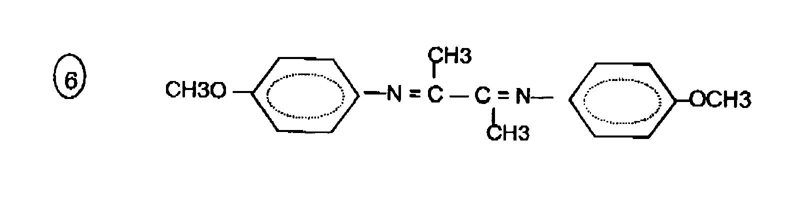 Les ligands peuvent en outre porter une fonction telle qu'ammonium, phosphonium, acide carboxylique, amine, alcool ou sulfonate.

On peut éventuellement mettre en jeu un composé organique qui joue le rôle de solvant ; comme solvants, on peut utiliser les hydrocarbures aliphatiques ou aromatiques, les éthers, les esters, les hydrocarbures halogénés et, à faible concentration, des sulfoxydes et des amides ; la réaction peut aussi être réalisée en absence de solvant ajouté ; c'est alors le composé poly-insaturé ou mono-insaturé qui joue le rôle de solvant.

On peut adjoindre au catalyseur d'hydrogénation au moins un sel d'un autre métal de transition choisi (si le métal principal est le fer) parmi les métaux des groupes 5 à 11, et choisi plus particulièrement parmi Co, Ni, Cu, Rh, Pd, Mn, Mo, W et V, de préférence parmi Ni, Cu, Rh et Pd. Le métal additionnel est introduit en proportion mineure par rapport au métal principal.

On peut également mettre en oeuvre la réaction en utilisant les liquides ioniques comme solvants du catalyseur.

Ainsi, l'invention a également pour objet une composition catalytique comprenant au moins un composé de fer au moins un ligand, au moins un réducteur et au moins un liquide ionique de formule Q⁺ A⁻, tel qu'il sera défini ci-après.

Ces solvants, qui sont constitués uniquement d'ions, présentent des propriétés physico-chimiques, en particulier leur solubilité avec les composés organiques, qui peuvent être modulées en fonction du choix de l'anion et du cation. Leur application en catalyse a fait l'objet de plusieurs revues ; la plus récente est celle de R. Sheldon, Chem. Commun. 2001, 2399. II est ainsi possible de choisir le liquide ionique de telle façon que les produits issus de la réaction soient peu miscibles dans le liquide ionique dans lequel est dissous le catalyseur. La réaction est alors opérée en milieu biphasique. Les produits peuvent aisément être séparés du catalyseur et du solvant par simple décantation. Le catalyseur et le solvant peuvent être recyclés.

Le brevet US-A-6 040 263 de la demanderesse décrit l'utilisation de ces milieux associés à des complexes des métaux de transition des groupes 8, 9 et 10 (ou groupe VIII) pour l'hydrogénation de composés insaturés. Il a en effet été trouvé que les complexes des fer, associés à un ligand, dans un liquide ionique de formule générale Q⁺ A⁻ étaient susceptibles d'hydrogéner les dérivés insaturés, en particulier les dioléfines avec des sélectivités et des activités améliorées. Dans ce cas, le ligand est un ligand azoté choisi par exemple parmi ceux décrits plus haut.

Le liquide ionique non-aqueux est choisi dans le groupe formé par les sels liquides qui ont pour formule générale Q⁺A⁻ dans laquelle Q⁺ représente un ammonium quaternaire et/ou un phosphonium- quaternaire et A⁻ représente tout anion susceptible de former un sel liquide à basse température, c'est-à-dire en dessous de 90 °C et avantageusement d'au plus 85 °C, et de préférence en dessous de 50 °C. Les anions A⁻ préférés sont les ions chloroaluminates de type RₓAl_{y}X_{z}⁻ (x = 0-4, y = 1-3, z = 0-10), nitrate, sulfate, phosphate, acétate, halogénoacétates, tétrafluoroborate, tétrachloroborate, hexafluorophosphate, hexafluoroantimonate, fluorosulfonate, alkylsulfonates perfluoroalkylsulfonates, bis(perfluoroalkylsulfonyl)amidures, et arènesulfonates, ces derniers étant éventuellement substitués par des groupements halogènes ou halogénoalkyles.

Les ammonium et/ou phosphonium quaternaires Q⁺ répondent de préférence aux formules générales NR¹R²R³R⁴⁺ et PR¹R²R³R⁴⁺, ou aux formules générales R¹R²N=CR³R⁴⁺ et R¹R²P=CR³R⁴⁺ où R¹,R², R³ et R⁴, identiques ou différents, représentent l'hydrogène (à l'exception du cation NH₄⁺ pour NR¹R²R³R⁴⁺), de préférence un seul substituant représentant l'hydrogène, ou des restes hydrocarbyles ayant de 1 à 30 atomes de carbone, par exemple des groupements alkyles, saturés ou non saturés, cycloalkyles ou aromatiques, aryle ou aralkyle, éventuellement substitués, comprenant de 1 à 30 atomes de carbone.

Les ammonium et/ou phosphonium peuvent également être dérivés d'hétérocycles azotés et/ou phosphorés comportant 1, 2 ou 3 atomes d'azote et/ou de phosphore, de formules générales : 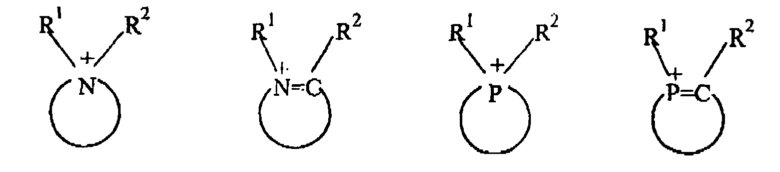 dans lesquelles les cycles sont constitués de 4 à 10 atomes, de préférence 5 à 6 atomes, R¹ et R² sont définis comme précédemment.

L'ammonium ou le phosphonium quaternaire peuvent également être un cation de formule :

R¹R²⁺N=CR³-R⁵-R³C=N⁺R¹R²

ou

R¹R²⁺P=CR³-R⁵-R³C=P⁺R¹R²

dans laquelle R¹, R² et R³, identiques ou différents, sont définis comme précédemment et R⁵ représente un reste alkylène ou phénylène. Parmi les groupements R¹, R², R³ et R⁴ , on mentionnera les radicaux méthyle, éthyle, propyle, isopropyle, butyle, butyle secondaire, butyle tertiaire, amyle, méthylène, éthylidène, phényle ou benzyle ; R⁵ pourra être un groupement méthylène, éthylène, propylène ou phénylène.

Le cation ammonium et/ou phosphonium Q⁺ est choisi de préférence dans le groupe formé par le N-butylpyridinium, le N-éthylpyridinium, le pyridinium, l'éthyl-3-méthyl-1-imidazolium, le butyl-3-méthyl-1-imidazolium, l'hexyl-3-méthyl-1-imidazolium, le butyl-3-diméthyl-1,2-imidazolium, le diéthyl-pyrazolium, le N-butyl-N-méthylpyrrolidinium, le triméthylphényl-ammonium, le tétrabutylphosphonium et le tributyl-tétradécyl-phosphonium.

A titre d'exemples des sels utilisables selon l'invention on peut citer l'hexafluorophosphate de N-butyl-pyridinium, le tétrafluoroborate de N-éthylpyridinium, le fluorosulfonate de pyridinium, le tétrafluoroborate de butyl-3-méthyl-1-imidazolium, l'hexafluoro-antimonate de butyl-3-méthyl-1-imidazolium, l'hexafluorophosphate de butyl-3-méthyl-1-imidazolium, le trifluoroacétate de butyl-3-méthyl-1-imidazolium, le trifluorométhylsulfonate de butyl-3-méthyl-1-imidazolium, le bis (trifluorométhylsulfonyl)amidure de butyl-3-méthyl-1-imidazolium, l'hexafluorophosphate de triméthyl-phénylammonium, et le tétrafluoroborate de tétrabutylphosphonium. Ces sels peuvent être utilisés seuls ou en mélange.

Le rapport molaire entre le ligand et le sel de métal de transition est compris entre 0,5/1 et 10/1 et de manière préférée entre 0,5/1 et 3/1.

Si le ligand est mono-coordinant, on a intérêt à l'utiliser avec un rapport molaire ligand/sel de métal de transition de 2/1 à 3/1. Si le ligand est bi-coordinant on l'utilisera plutôt avec un rapport molaire ligand/sel de métal de transition de 1/1 à 1,5/1.

Le rapport molaire entre le réducteur et le sel de métal de transition est généralement de 1/1 à 15/1, de préférence de 1,2/1 à 5/1.

Selon la présente invention, deux voies de préparation du catalyseur peuvent être considérées.

La première consiste à injecter séparément les produits dans un grignard en inox contenant le substrat à hydrogéner.

La seconde consiste en la préparation du mélange *ex situ.* Cette façon de procéder à l'avantage de pouvoir vérifier visuellement l'état de réduction du fer. En effet lorsqu'on injecte le TEA dans le ballon contenant le complexe fer-diimine, on constate que la solution initialement rouge devient brun foncé. Un dégagement gazeux constitué d'un mélange éthane/éthylène résulte de l'action réductrice du TEA. D'autre part, on ne procède plus qu'à une seule injection par seringue dans le réacteur de catalyse. Les performances obtenues sont quasiment identiques suivant le mode opératoire utilisé.

Généralement, il est préférable d'ajouter le ligand au composé du fer en présence de dioléfine, avant d'ajouter le réducteur. On peut également isoler un complexe réduit du fer de type FeHXL2 (où L est une imine) ou FeHXL' (ou L' est une diimine) et ou X est un halogène, un acétylacétonate ou un carboxylate et d'y ajouter un alkylaluminium ou tout autre réducteur en présence de dioléfine.

Dans le cas de l'hydrogénation sélective du butadiène-1,3, la composition catalytique est ajoutée au système en quantité catalytique. Cette quantité s'exprime en ppm (parties par million) de composés métalliques dans le milieu réactionnel et est comprise entre 10 et 10 000 ppm et de préférence entre 40 et 300 ppm.

La température de réaction est comprise entre 0 et 70 °C et de préférence entre 10 et 30 °C.

La pression partielle d'hydrogène est comprise entre 0 et 20 MPa, de préférence de 0,01 à 5 MPa et d'une façon privilégiée entre 0,5 et 1,5 MPa.

Les exemples suivants illustrent l'invention sans en limiter la portée.

### Exemple 1

### Synthèse du catalyseur

Le catalyseur défini dans l'invention est obtenu après mélange des trois composés dans l'ordre suivant soit : sel métallique - ligand - réducteur, respectivement dans un rapport molaire équivalent à 1/1/3.
a) Préparation d'une solution de sel de fer dans du n-heptane à partir d'octoate de fer, qui est un liquide brun visqueux constitué d'éthyl-2 hexanoate de fer^{III} en présence d'un faible excès d'acide éthyl-2 hexanoïque et en solution dans du white spirit désaromatisé. Ce produit titre 10 % en poids de fer. On en prépare une solution dans du n-heptane à une concentration égale à 0,7 g de fer/100 ml soit 12,5 mMol/100 ml.
b) Préparation de la solution de diimine (ligand). On utilise le 2,3-bis(2,6-diméthylphénylimino)butane ayant la formule développée n° ① présentée dans le paragraphe décrivant les ligands. Cette diimine est mise en solution dans le n-heptane à une concentration de 1,48 g/100m1 soit l'équivalent de 5 mMol/100ml.
c) Préparation de la solution de l'agent réducteur. Le triéthylaluminium ([Al(Et)₃] ou TEA) est un liquide à l'état pur, très sensible à l'eau et à l'oxygène de l'air. Sa faculté d'auto-inflamabilité, au contact de l'air, disparaît lorsqu'il est en solution diluée dans un solvant inerte comme les n-paraffines.On utilisera une solution diluée de triéthylaluminium dans l'heptane titrant 1,32 mMol/ml. A noter que l'heptane qui est utilisé comme solvant pour la mise en solution des réactifs doit être préalablement séché et conservé sur tamis moléculaire afin de le maintenir anhydre.

Le premier test a consisté à introduire successivement, à l'aide d'une seringue, dans le Grignard faiblement agité et contenant un mélange constitué de 120 ml de n-heptane et 8,4g de butadiène-1,3 maintenu à la température de 17 °C, 2,7 ml de la solution de sel de fer, puis 6,7 ml de la solution de diimine et enfin 0,8 ml de la solution de TEA. Cette composition catalytique correspond à une concentration en fer de l'ordre de 200 ppm par rapport au milieu réactionnel.

Ensuite l'appareillage est mis sous une pression d'hydrogène de 1 MPa, et l'agitation est augmentée de façon à augmenter la solubilité de l'hydrogène dans la phase liquide. La pression d'hydrogène est maintenue constante dans le Grignard et la consommation d'hydrogène est mesurée par la baisse de pression d'hydrogène contenue dans un sas intermédiaire de volume connu.

Cette façon d'opérer permet d'estimer avec une certaine précision la quantité théorique d'hydrogène nécessaire pour convertir tout le butadiène-1,3 mis en jeu et donc de pouvoir arrêter la réaction et/ou d'effectuer des prélèvements intermédiaires pour analyse. Dans les conditions de l'essai, l'hydrogénation des 8,4 g de butadiène-1,3 correspond à une rapide baisse de pression dans le sas de 3 MPa d'hydrogène. Si on laisse poursuivre l'hydrogénation, la vitesse de réaction correspondant à la conversion des butènes en butane accuse une nette diminution de la consommation en hydrogène.

Dans les exemples donnés avec le butadiène-1,3, une prise d'échantillon est effectuée sur la base d'une consommation théorique de 80 % de conversion du butadiène-1,3. Dans cet exemple, on atteint cette conversion après 94 secondes de réaction.

Les performances du système catalytique (activité, sélectivité en butène-2 cis et sélectivité en butène-1) sont consignées dans le Tableau 4.

### Exemple 2

On opère selon le même mode opératoire que dans l'Exemple 1, mais le catalyseur est préparé en dehors du réacteur et injecté après réduction *ex situ.* On obtient des résultats identiques d'un point de vue sélectivité. Le temps de réaction pour atteindre les 80 % de conversion du butadiène-1,3 présent est à majorer de 20 secondes.

### Exemple 3

On opère selon le même mode opératoire que dans l'Exemple 1, mais on introduit 2 fois moins de catalyseur soit l'équivalent de 100 ppm de fer au lieu des 200 ppm. A cette concentration en catalyseur, on atteint les 80 % de conversion en 120 secondes.

Les performances du système catalytique (activité, sélectivité en butène-2 cis et sélectivité en butène-1) sont consignées dans le Tableau 4.

### Exemple 4

On opère selon le même mode opératoire que dans l'Exemple 1, mais on introduit l'équivalent de 80 ppm de fer au lieu des 200 ppm et 100 ppm des Exemples 1 et 3. Dans cet exemple, les 80 % de conversion sont obtenus en 188 secondes. Cette valeur étant obtenue sur la courbe de consommation d'hydrogène dont les valeurs portées dans le Tableau 1 permettent de tracer quelques points.

Les performances du système catalytique (activité, sélectivité en butène-2 cis et sélectivité en butène-1) sont consignées dans le Tableau 4.

**Tableau 1**

| **Temps (sec)** | **n-C4 (%)** | **Bu-2 trans (%)s** | **Bu-1 (%)** | **Bu-2 cis (%)** | **Butadiène- 1,3 (%)** | **Sélectivité B-2cis/Σ butènes** |
|---|---|---|---|---|---|---|
| 105 | 0,15 | 0,10 | 0,40 | 60,95 | 38,35 | 99,18 |
| 162 | 0,20 | 0,20 | 0,55 | 75,85 | 23,20 | 99,02 |
| 488 | 0,40 | 0,30 | 0,95 | 97,85 | 0,55 | 98,74 |

### Exemple 5 : Exemple comparatif utilisant le système catalytique de l'invention sans utiliser de ligand.

Soit une concentration en sel de fer de 200 ppm comme dans l'Exemple 1 avec un rapport AlEt₃/Fe de 3.

On obtient les 80 % de conversion en butadiène-1,3 après 125 secondes et la composition du milieu réactionnel est consignée dans le Tableau 2.

**Tableau 2**

| **Temps (sec)** | **n-C4 (%)** | **Bu-2 trans (%)** | **Bu-1 (%)** | **Bu-2 cis (%)** | **Butadiène- 1,3 (%)** | **Sélectivité Bu-2 cis/ Σ butènes** |
|---|---|---|---|---|---|---|
| 35 | 0,95 | 1,40 | 9,20 | 10,45 | 78,00 | 49,64 |
| 118 | 3,65 | 5,65 | 34,75 | 26,75 | 29,20 | 39,84 |
| 140 | 5,45 | 7,60 | 44,80 | 30,65 | 11,50 | 36,90 |
| 154 | 17,65 | 9,90 | 45,95 | 31,95 | 0,55 | 36,39 |

### Exemple 6

On répète le mode opératoire de l'Exemple 1 mais on remplace le ligand [2,3-bis(2,6-diméthyl phénylimino)butane] par du [2,3 bis(2,6-diisopropyl phényl-imino)butane] (voir formule développée n°④). Le temps de réaction pour atteindre la conversion de 80 % en butadiène-1,3 est de 22 secondes.

Les résultats sont consignés dans le Tableau 3.

**Tableau 3**

| **Temps (sec)** | **n-C4 (%)** | **Bu-2 trans (%)** | **Bu-1 (%)** | **Bu-2 cis (%)** | **Butadiène- 1,3 (%)** | **Sélectivité Bu-2 cis/ Σ butènes** |
|---|---|---|---|---|---|---|
| 15 | 0,15 | 0,05 | 0,10 | 56,60 | 43,10 | 99,70 |
| 20 | 0,15 | 0,10 | 0,15 | 71,70 | 27,90 | 99,67 |
| 30 | 0,15 | 0,10 | 0,20 | 98,20 | 1,35 | 99,71 |
| 102 | 2,50 | 3,35 | 0,60 | 93,15 | 0,40 | 95,89 |

### Exemple 7 : Essai comparatif entre le catalyseur de l'invention et un catalyseur hétérogène constitué de palladium supporté sur alumine dans les mêmes conditions opératoires de l'Exemple 1.

On introduit 2 g de catalyseur palladium/alumine à 0,3 % de Pd dans le Grignard. Dans le Tableau 6, on compare l'activité catalytique exprimée en moles de butadiène-1,3 consommées/minutes/g de métal.

On compare également la sélectivité en butène-2 cis et en butène-1. Ces sélectivités sont mesurées à une conversion en butadiéne-1,3 de 80 %.

Les résultats sont consignés dans le Tableau 4.

**Tableau 4**

| **Exemple** | **Catalyseur** | **Activité (mol/min/g de métal)** | **Sélectivité* en butène-2 cis (%)** | **Sélectivité* en butène-1 (%)** |
|---|---|---|---|---|
| 1 | Fer (200 ppm) | 4,74 | 98.50 | 1 |
| 3 | Fer (100 ppm) | 2,88 | 99,01 | 0,8 |
| 4 | Fer (80 ppm) | 2,23 | 98,60 | 1 |
| 7 | Pd/Al₂O₃ | 1,98 | 20,00 | 60 |

| | | | | |
|---|---|---|---|---|
| * : sélectivités mesurées à une conversion en butadiène-1,3 de 80 %. | | | | |

Le catalyseur, qui est classiquement utilisé en catalyse hétérogène, ne permet pas d'obtenir directement du butène-2 cis, mais majoritairement du butène-1.

L'activité comparée exprimée en moles de butadiène-1,3 converties par minutes et par gramme de métal est jusqu'à 2,4 fois plus grande avec le catalyseur homogène à base de fer. De plus, la sélectivité en butène-2 cis est très élevée : proche de 99 %.

La particularité de ce système catalytique est justement la très faible quantité de butène-1 fabriquée et par exemple pour l'Exemple 3 la très faible quantité de n butane formée avec une quantité de butadiène-1,3 restant de l'ordre de 0,5 %.

### Exemple 8

Le mode opératoire est le même que dans l'Exemple 1, mais la composition du substrat à hydrogéner est différente. Il s'agit d'un mélange composé de 50 % de butadiène-1,3 et 50 % de butène-1.

**Tableau 5**

| **Temps (sec)** | **n-C4 (%)** | **Bu-2 trans (%)** | **Bu-1 (%)** | **Bu-2 cis (%)** | **Butadiène- 1,3 (%)** | **Conversion Butadiène-1,3 (%)** |
|---|---|---|---|---|---|---|
| 72 | 0,16 | 0,00 | 50,50 | 21,03 | 25,40 | 49,20 |
| 288 | 0,14 | 0,00 | 50,57 | 42,80 | 3,58 | 92,95 |
| 498 | 0,50 | 0,35 | 50,24 | 45,94 | 0,00 | 100,00 |

On remarque également que le système catalytique transforme totalement le butadiène-1,3 principalement en butène-2 cis, sans toucher à la molécule de butène-1 qui pourrait donner du butène-2 cis ou trans par isomérisation ou du n-butane après hydrogénation.

### Exemple 9

On utilise le même système catalytique que dans l'Exemple 1 mais on remplace la nature de la charge à hydrogéner par de l'hexadiène-2,4.

La température de catalyse est de 22 °C et la pression d'hydrogène est de 1 MPa.

La concentration en fer dans le milieu réactionnel est de 200 ppm et le temps de réaction pour atteindre la conversion de 80 % en butadiène-1,3 est de 60 secondes.

Les résultats sont consignés dans le Tableau 6.

**Tableau 6**

| **Temps (sec)** | **n C6 (%)** | **Hexène-2 tr (%)** | **Hexène-1 (%)** | **Hexène-2 cis (%)** | **Hexadiène- 2,4 (%)** | **Sélectivité hexène-2 t/ Σ hexènes** |
|---|---|---|---|---|---|---|
| 45 | 0,40 | 63,25 | 0,15 | 0,70 | 35,45 | 98,67 |
| 60 | 0,35 | 79,40 | 0,20 | 0,95 | 19,15 | 98,57 |
| 80 | 0,50 | 86,70 | 0,20 | 1,10 | 11,50 | 98,52 |
| 95 | 0,45 | 93,10 | 0,20 | 1,50 | 4,80 | 98,21 |
| 110 | 0,85 | 96,85 | 0,20 | 2,05 | 0,10 | 97,73 |

## Revendications

1. Procédé d'hydrogénation sélective d'au moins du butadiène-1,3 dans une charge comprenant une coupe C4, ledit procédé comprenant le passage de ladite charge au contact d'une composition de catalyseur, **caractérisé en ce que** ladite composition de catalyseur comprend :
- au moins un sel de fer choisi parmi les halogénures, les acétylacétonates et les carboxylates d'acides organiques possédant de 2 à 25 atomes de carbone ;
- au moins un ligand azoté ;
- et au moins un réducteur organométallique choisi parmi les dérivés organométalliques d'au moins un métal choisi dans le groupe formé par le lithium, le sodium, l'aluminium.

2. Procédé selon la revendication 1 **caractérisé en ce que** le carboxylate est choisi parmi les acétates, les octoates, les décanoates, les naphténates, les stéarates, les palmitates les oléates et les benzoates.

3. Procédé selon l'une des revendications 1 et 2 **caractérisé en ce que** le réducteur est choisi parmi :
- les organoaluminiques de formule générale AlRy(X)_{3-y}, où R est un groupement alkyle, X est un halogénure et y = 1, 2 ou 3,
- les magnésiens de formule MgR₂, avec R défini comme ci-dessus ;
- les aluminoxanes ;
- le borhydrure de sodium ; et
- les hydrures alcalins et leurs dérivés de substitution par 1, 2 ou 3 groupements alcoxy.

4. Procédé selon l'une des revendications 1 à 3 **caractérisé en ce que** le ligand azoté est choisi parmi les amines, les polyamines, l'imidazole, les imidazoles substitués, le pyrrole, les pyrroles substitués, les pyrazoles, les dérivés amidiques, les imines, les diimines et les dérivés pyridiniques.

5. Procédé selon l'une des revendications 1 à 4 **caractérisé en ce que** l'on adjoint au catalyseur une proportion mineure d'au moins un sel d'un autre métal de transition choisi parmi les métaux des groupes 5 à 11 .

6. Procédé selon la revendication 5 **caractérisé en ce que** le métal additionnel est choisi parmi Co, Ni, Cu, Rh, Pd, Mn, Mo, W et V.

7. Procédé selon l'une des revendications 1 à 6 **caractérisé en ce qu'**elle est mise en solution dans au moins un composé organique choisi parmi les hydrocarbures aliphatiques ou aromatiques, les éthers, les esters, les hydrocarbures halogénés, les sulfoxydes et les amides.

8. Procédé selon l'une des revendications 1 à 7 **caractérisé en ce qu'**elle est mise en solution dans au moins un liquide ionique de formule générale Q⁺ A⁻, dans laquelle Q⁺ représente un ammonium quaternaire et/ou un phosphonium quaternaire et A- représente tout anion susceptible de former un sel liquide à basse température, c'est-à-dire en dessous de 90 °C.

9. Procédé selon la revendication 8 **caractérisé en ce que** l'ammonium et/ou le phosphonium quaternaire Q⁺ répond à l'une des formules générales :
NR¹R²R³R⁴⁺ et PR¹R²R³R⁴⁺,
ou à l'une des formules générales :
R1R2N=CR3R4+ et R1R2P=CR3R4⁺
dans lesquelles R¹, R², R³ et R⁴, identiques ou différents, représentent chacun l'hydrogène, le cation NH₄⁺ étant exclu pour NR¹R²R³R⁴⁺, ou un reste hydrocarbyle ayant de 1 à 30 atomes de carbone.

10. Procédé selon la revendication 8 **caractérisé en ce que** l'ammonium et/ou le phosphonium quaternaire Q⁺ dérive d'un hétérocycle azoté ou phosphoré comportant 1, 2 ou 3 atomes d'azote ou de phosphore, répondant à l'une des formules générales : 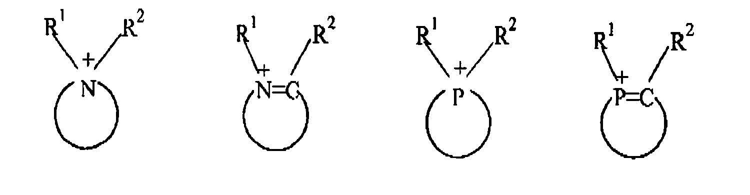 dans lesquelles les cycles sont constitués de 4 à 10 atomes et R¹ et R², identiques ou différents, représentent chacun l'hydrogène ou un reste hydrocarbyle ayant de 1 à 30 atomes de carbone.

11. Procédé selon la revendication 8 **caractérisé en ce que** l'ammonium et/ou le phosphonium quaternaire répond à l'une des formules générales :
R¹R²⁺N=CR³-R⁵-R³C=N+R¹R²
et
R¹R²⁺P=CR³-R⁵-R³C=P⁺R¹R²
dans lesquelles R¹, R² et R³, identiques ou différents, représentent chacun l'hydrogène ou un reste hydrocarbyle ayant de 1 à 30 atomes de carbone et R⁵ représente un reste alkylène ou phénylène.

12. Procédé selon l'une des revendications 1 à 11 **caractérisé en ce que** le rapport molaire entre le ligand et le sel de métal de transition est compris entre 0,5/1 et 10/1.

13. Procédé selon la revendication 12 **caractérisé en ce que** le ligand est mono-coordinant et le rapport molaire ligand/sel de métal de transition est de 2/1 à 3/1.

14. Procédé selon la revendication 12 **caractérisé en ce que** le ligand est bi-coordinant et le rapport molaire ligand/sel de métal de transition est de 1/1 à 1,5/1.

15. Procédé selon l'une des revendications 1 à 14 **caractérisé en ce que** le rapport molaire entre le réducteur et le sel de métal de transition est de 1/1 à 15/1.

16. Procédé selon l'une des revendications 1 à 15, **caractérisé en ce que** ladite composition de catalyseur est mise en jeu en une proportion correspondant à une proportion de composés métalliques dans le milieu réactionnel de 10 à 10 000 ppm en poids.

17. Procédé intégré de production de butène-1 à partir d'une coupe C4 riche en butène-1 **caractérisé en ce qu'**il comprend, à titre d'étape de finition, une hydrogénation sélective du butadiène-1,3 effectuée par un procédé selon l'une des revendications 1 à 16 jusqu'à obtenir une teneur en butadiène-1,3 inférieure à 10 ppm en poids.

## Claims

1. A process for the selective hydrogenation of at least 1,3-butadiene contained in a feed comprising a C4-cut, said process comprising the passage of the said feed in contact with a catalyst composition, **characterized in that** said catalyst composition comprises
- at least one iron salt selected from halides, acetylacetonates and carboxylates of organic acids containing 2 to 25 carbon atoms,
- at least one nitrogen-containing ligand;
- and at least one organometallic reducing agent from organometallic derivatives of at least one metal selected from the group formed by lithium, sodium and aluminium.

2. A process according to claim 1, **characterized in that** the carboxylate is selected from acetates, octoates, decanoates, naphthenates, stearates, palmitates, oleates and benzoates.

3. A process according to one of claims 1 to 2, **characterized in that** the reducing agent is selected from:
• organoaluminas with general formula AlR_{y}(X)_{3-y}, in which R is an alkyl group, X is a halide and y=1, 2 or 3;
• magnesias with formula MgR₂, in which R is as defined above;
• aluminoxanes;
• sodium borohydride; and
• alkaline hydrides and their substitution derivatives comprising 1, 2 or 3 alkoxy groups.

4. A process according to one of claims 1 to 3, **characterized in that** the nitrogen-containing ligand is selected from amines, polyamines, imidazole, substituted imidazoles, pyrrole, substituted pyrroles, pyrazoles, amide derivatives, imines, diimines and pyridine derivatives.

5. A process according to one of claims 1 to 4 **characterized in that** a minor proportion of at least one salt of a further transition metal selected from metals from groups 5 to 11 is added to the catalyst.

6. A process according to claim 5, **characterized in that** the additional metal is selected from Co, Ni, Cu, Rh, Pd, Mn, Mo, W and V.

7. A process according to one of claims 1 to 6, **characterized in that** it is dissolved in at least one organic compound selected from aliphatic or aromatic hydrocarbons, ethers, esters, halogenated hydrocarbons, sulphoxides and amides.

8. A process according to one of claims 1 to 7, **characterized in that** it is dissolved in at least one ionic liquid with general formula Q⁺ A⁻ in which Q⁺ represents a quaternary ammonium and/or quaternary phosphonium ion and A⁻ represents any anion which is capable of forming a liquid salt at low temperatures, i.e. below 90°C.

9. A process according to claim 8, **characterized in that** the quaternary ammonium and/or phosphonium ion Q⁺ has one of the following general formulae:
NR¹R²R³R⁴⁺ and PR¹R²R³R⁴⁺
or one of general formulae:
R¹R²N=C R³R⁴⁺ and R¹R²P=CR³R⁴⁺
in which R¹, R², R³ and R⁴, which may be identical or different, each represent hydrogen, the cation NH₄⁺ being excluded for NR¹R²R³R⁴⁺, or a hydrocarbyl residue containing 1 to 30 carbon atoms.

10. A process according to claim 8, **characterized in that** the quaternary ammonium and/or phosphonium ion Q⁺ derives from a nitrogen-containing or phosphorus-containing heterocycle comprising 1, 2 or 3 nitrogen or phosphorus atoms, having one of the following general formulae: 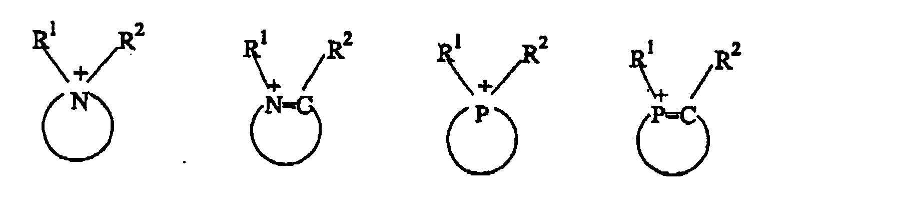 in which the cycles are constituted by 4 to 10 atoms and R¹ and R², which may be identical or different, each represent hydrogen or a hydrocarbyl residue containing 1 to 30 carbon atoms.

11. A process according to claim 8, **characterized in that** the quaternary ammonium and/or phosphonium ion has one of the following formulae:
R¹R²⁺N=CR³-R⁵-R³C=N⁺R¹R²
or
R¹R²⁺P=CR³-R⁵-R³C=P⁺R¹R²
in which R¹, R² and R³, which may be identical or different, each represent hydrogen or a hydrocarbyl residue containing 1 to 30 carbon atoms and R⁵ represents an alkylene or phenylene residue.

12. A process according to one of claims 1 to 11 **characterized in that** the mole ratio between the ligand and the transition metal salt is in the range 0.5/1 to 10/1.

13. A process according to claim 12, **characterized in that** the ligand is monocoordinating and the ligand/transition metal salt mole ratio is 2/1 to 3/1.

14. A process according to claim 12, **characterized in that** the ligand is bi-coordinating and the ligand/transition metal salt mole ratio is 1/1 to 1.5/1.

15. A process according to one of claims 1 to 14, **characterized in that** the mole ratio between the reducing agent and the transition metal salt is 1/1 to 15/1.

16. A process according to one of claims 1 to 15, **characterized in that** said catalyst composition is employed in a proportion corresponding to a proportion of metallic compounds in the reaction medium of 10 to 10000 ppm by weight.

17. An integrated process for producing 1-butene from a 1-butene rich C₄ cut,
**characterized in that** it comprises, as the finishing step, selective hydrogenation of 1,3-butadiene carried out using a process according to one of the claims 1 to 16 to obtain a 1,3-butadiene content of less than 10 ppm by weight.

## Patentansprüche

1. Verfahren zur selektiven Hydrierung von mindestens 1,3-Butadien, in einer Beschickung, die einen C4-Schnitt umfasst, wobei das Verfahren die Passage der Beschickung im Kontakt mit einer Katalysatorzusammensetzung umfasst, **dadurch gekennzeichnet, dass** die Katalysatorzusammensetzung umfasst:
- mindestens ein Eisensalz, ausgewählt aus den Halogeniden, Acetylacetonaten und Carboxylaten organischer Säuren, die 2 bis 25 Kohlenstoffatome besitzen;
- mindestens einen stickstoffhaltigen Liganden;
- und mindestens ein metallorganisches Reduktionsmittel, ausgewählt aus den metallorganischen Derivaten mindestens eines Metalls, ausgewählt aus der Gruppe gebildet aus Lithium, Natrium, Aluminium.

2. Verfahren nach Anspruch 1, **dadurch gekennzeichnet, dass** das Carboxylat ausgewählt ist aus den Acetaten, Octoaten, Decanoaten, Naphtenaten, Stearaten, Palmitaten, Oleaten und Benzoaten.

3. Verfahren nach einem der Ansprüche 1 und 2, **dadurch gekennzeichnet, dass** das Reduktionsmittel ausgewählt ist aus:
- den aluminiumorganischen Verbindungen der allgemeinen Formel AlR_{y}(X)_{3-y}, wobei R eine Alkylgruppe ist, X ein Halogenid ist, und y = 1, 2 oder 3 ist,
- den Magnesiumoxiden der Formel MgR₂, wobei R wie oben definiert ist;
- den Aluminoxanen;
- Natriumborhydrid; und
- den alkalischen Hydriden und deren Derivaten, die mit 1, 2 oder 3 Alkoxygruppen substituiert sind.

4. Verfahren nach einem der Ansprüche 1 bis 3, **dadurch gekennzeichnet, dass** der stickstoffhaltige Ligand ausgewählt ist aus den Aminen, Polyaminen, Imidazol, substituierten Imidazolen, Pyrrol, substituierten Pyrolen, Pyrazolen, Amidderivaten, Iminen, Düminen und Pyridinderivaten.

5. Verfahren nach einem der Ansprüche 1 bis 4, **dadurch gekennzeichnet, dass** dem Katalysator ein kleinerer Anteil mindestens eines Salzes eines anderen Übergangsmetalls, ausgewählt aus den Metallen der Gruppen 5 bis 11, zugefügt wird.

6. Verfahren nach Anspruch 5, **dadurch gekennzeichnet, dass** das zusätzliche Metall ausgewählt ist aus Co, Ni, Cu, Rh, Pd, Mn, Mo, W und V.

7. Verfahren nach einem der Ansprüche 1 bis 6, **dadurch gekennzeichnet, dass** es in mindestens einer organischen Verbindung, ausgewählt aus aliphatischen oder aromatischen Kohlenwasserstoffen, Ethern, Estern, halogenierten Kohlenwasserstoffen, Sulfoxiden und Amiden gelöst in Lösung gebracht wird.

8. Verfahren nach einem der Ansprüche 1 bis 7, **dadurch gekennzeichnet, dass** es in mindestens einer ionischen Flüssigkeit der allgemeinen Formel Q⁺A⁻ in Lösung gebracht wird, worin Q⁺ für ein quartäres Ammonium und/oder ein quartäres Phosphonium steht und A⁻ für jedes Anion steht, das ein flüssiges Salz bei niedriger Temperatur, das heißt, unterhalb von 90 °C, bilden kann.

9. Verfahren nach Anspruch 8, **dadurch gekennzeichnet, dass** das quartäre Ammonium und/oder Phosphonium Q⁺ einer der allgemeinen Formeln entspricht:
NR¹R²R³R⁴⁺ und PR¹R²R³R⁴⁺,
oder einer der allgemeinen Formeln:
R¹R²N=CR³R⁴⁺ und R¹R²P=CR³R⁴⁺
worin R¹, R², R³ und R⁴, gleich oder verschieden, jeweils für Wasserstoff steht, wobei das Kation NH₄⁺ für NR¹R²R³R⁴⁺ ausgeschlossen ist, oder ein Hydrocarbylrest, der 1 bis 30 Kohlenstoffatome aufweist.

10. Verfahren nach Anspruch 8, **dadurch gekennzeichnet, dass** das quartäre Ammonium und/oder Phosphonium Q⁺, von einem stickstoff- oder phosphorhaltigen Heterozyklus abgeleitet ist, der 1, 2 oder 3 Stickstoff- oder Phosphoratome umfasst, die einer der allgemeinen Formeln entsprechen: 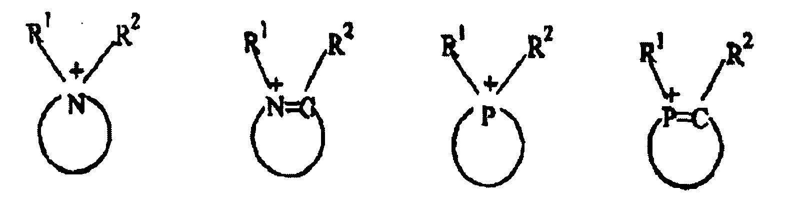 worin die Zyklen aus 4 bis 10 Atomen bestehen und R¹ und R², gleich oder verschieden, jeweils für Wasserstoff oder einen Hydrocarbylrest stehen, der 1 bis 30 Kohlenstoffatome aufweist.

11. Verfahren nach Anspruch 8, **dadurch gekennzeichnet, dass** das quartäre Ammonium und/oder Phosphonium einer der allgemeinen Formeln entspricht:
R¹R²⁺N=CR³-R⁵-R³C=N⁺R¹R²
und
R¹R²+P=CR³-R⁵-R³C=P⁺R¹R²
worin R¹, R² und R³, gleich oder verschieden, jeweils für einen Wasserstoff oder einen Hydrocarbylrest stehen, der 1 bis 30 Kohlenstoffatome aufweist, und R⁵ für einen Alkylen- oder Phenylenrest steht.

12. Verfahren nach einem der Ansprüche 1 bis 11, **dadurch gekennzeichnet, dass** das Molverhältnis zwischen dem Liganden und dem Salz des Übergangsmetalls im Bereich zwischen 0,5/1 und 10/1 liegt.

13. Verfahren nach Anspruch 12, **dadurch gekennzeichnet, dass** der Ligand monokoordinierend ist und dass das Molverhältnis Ligand/Salz des Übergangsmetalls bei 2/1 bis 3/1 liegt.

14. Verfahren nach Anspruch 12, **dadurch gekennzeichnet, dass** der Ligand dikoordinierend ist und dass das Molverhältnis Ligand/Salz des Übergangsmetalls bei 1/1 bis 1,5/1 liegt.

15. Verfahren nach einem der Ansprüche 1 bis 14, **dadurch gekennzeichnet, dass** das Molverhältnis zwischen dem Reduktionsmittel und dem Salz des Übergangsmetalls im Bereich zwischen 1/1 und 15/1 liegt.

16. Verfahren nach einem der Ansprüche 1 bis 15, **dadurch gekennzeichnet, dass** die Katalysatorzusammensetzung in einem Anteil benutzt wird, der einem Anteil an Metallverbindungen in dem Reaktionsmedium von 10 bis 10.000 Gew.ppm entspricht.

17. Integriertes Verfahren zur Produktion von 1-Buten aus einem C4-Schnitt, der reich an 1-Buten ist, **dadurch gekennzeichnet, dass** es, als Endbearbeitungsschritt, eine selektive Hydrierung des 1,3-Butadiens umfasst, die durch ein Verfahren nach einem der Ansprüche 1 bis 16 ausgeführt wird, bis ein Gehalt an 1,3-Butadien von weniger als 10 Gew.-ppm erhalten wird.
